# DEMANDE DE BREVET EUROPEEN

(11) **EP 2 425 727 A1**
(43) Date de publication de la demande: **07.03.2012**
(21) Numéro de dépôt: 11173591.6
(22) Date de dépôt: 12.07.2011
(51) Int. Cl.: A41D 13/015

(54) **Dispositif de protection d'une personne en cas de chute, notamment d'un utilisateur de véhicule à deux roues**

(30) Priorité: 01.09.2010 FR 1056929
(71) Demandeur: Scolan, M. Philippe, 69230 Saint Genis Laval (FR)
(72) Inventeur: Scolan, M. Philippe, 69230 Saint Genis Laval (FR)
(74) Mandataire: Jeannet, Olivier

(57) **Abrégé**

Ce dispositif (1) comprend :
- une structure rigide de base (2) dimensionnée de manière à recouvrir la majeure partie du dos d'un utilisateur ;
- une structure rigide mobile (3) reliée de manière coulissante à ladite structure de base (2), et mobile par rapport à cette dernière entre une position de rétraction et une position de déploiement ; cette structure (3) comprend une barre transversale supérieure (11) et deux arceaux (12), et
- des moyens (4) de déploiement automatique de ladite structure rigide mobile (3).

Le dispositif (1) est dimensionné de manière telle qu'en position de rétraction, ladite barre transversale (11) soit située au niveau de la nuque de l'utilisateur et lesdits arceaux (12) passent au dessus des épaules et s'étendent substantiellement le long du thorax de l'utilisateur, et qu'en position de déploiement de ladite partie de montage (10), ladite barre transversale (11) et la base desdits arceaux (12) se trouvent au niveau de la tête de l'utilisateur.

## Description

La présente invention concerne un dispositif de protection d'une personne en cas de chute, notamment de protection d'un utilisateur de véhicule à deux roues.

Il est connu d'utiliser des dispositifs de protection de vertèbres de personnes pratiquant des sports tels que la moto, le vélo, le ski, etc.

De tels dispositifs sont en général portés directement sur le dos des utilisateurs et comprennent une partie rigide en matériau léger, tel que de la matière plastique.

Avec de tels dispositifs, l'objectif est d'assurer une protection minimale des utilisateurs en cas de chutes à faible allure et d'obtenir un encombrement réduit permettant le port de ces dispositifs sous les vêtements des utilisateurs, de manière relativement esthétique.

Ces dispositifs existants ne donnent cependant pas parfaitement satisfaction en cas de chutes ou d'accidents à des vitesses importantes, en raison notamment de la résistance à la rupture relativement faible des matériaux utilisés, et ne permettent en outre que de protéger la partie dorsale des utilisateurs.

Il est également connu des dispositifs de protection à coussins gonflables, adaptés sur un sac à dos que porte l'utilisateur ou situés directement sur le véhicule à deux roues. Ces dispositifs présentent les inconvénients d'être relativement couteux, de requérir une réserve de gaz pour la détente du ou des organe(s) gonflable(s) qu'ils comprennent, de nécessiter un entretien régulier et de ne pas pouvoir être réutilisables en l'état après leur déclenchement.

Les documents GB 1 049 301, WO 2004/006701, WO 2005/013737 ou DE 313 278 illustrent divers dispositifs de l'art antérieur.

La présente invention a pour but de remédier à l'ensemble de ces inconvénients.

A cet effet, le dispositif qu'elle concerne comprend une structure rigide destinée à être placée sur le dos de l'utilisateur lorsque le dispositif est porté et dimensionnée de manière à recouvrir la majeure partie du dos de cet utilisateur, cette structure rigide comprenant une barre transversale dimensionnée de manière à s'étendre substantiellement sur la largeur des épaules d'un utilisateur lorsque le dispositif est porté par ce dernier, et deux arceaux s'étendant depuis ladite barre transversale, sur le côté avant de l'utilisateur lorsque le dispositif est porté, ledit dispositif étant dimensionné de manière telle que ladite barre transversale et la base desdits arceaux se trouvent au niveau de la tête de l'utilisateur.

Ainsi, en cas de chute de l'utilisateur équipé de ce dispositif de protection, ladite structure rigide constitue une cellule de protection non seulement du dos, mais également des vertèbres cervicales, des épaules et du thorax de cet utilisateur, et de contention de la tête de celui-ci.

De préférence, ladite structure rigide comprend :
- une structure rigide de base destinée à être placée sur le dos de l'utilisateur lorsque le dispositif est porté et dimensionnée de manière à recouvrir la majeure partie du dos de cet utilisateur ;
- une structure rigide mobile, déployable par rapport à ladite structure rigide de base, comprenant :
   i) une partie de montage reliée de manière coulissante à ladite structure rigide de base, et mobile par rapport à cette dernière entre une position de rétraction, dans laquelle elle est reçue dans cette structure rigide de base, et une position de déploiement, dans laquelle elle fait saillie de la partie supérieure de ladite structure rigide de base ;
   ii) ladite barre transversale, reliée à l'extrémité supérieure de ladite partie de montage ;
   iii) lesdits deux arceaux,
   ledit dispositif étant dimensionné de manière telle qu'en position de rétraction de ladite partie de montage, ladite barre transversale soit située au niveau de la nuque de l'utilisateur et lesdits arceaux passent au dessus des épaules de l'utilisateur et s'étendent substantiellement le long du thorax de cet utilisateur, et qu'en position de déploiement de ladite partie de montage, ladite barre transversale et la base desdits arceaux se trouvent au niveau de la tête de l'utilisateur ; et
- des moyens de déploiement automatique de ladite structure rigide mobile.

Ainsi, en cas de chute de l'utilisateur équipé de ce dispositif de protection, lesdits moyens de déploiement automatique sont actionnés de manière à amener ladite structure rigide mobile en position de déploiement, laquelle constitue dans cette position, avec la structure rigide de base, ladite cellule de protection et de contention.

Le profil de la structure rigide de base et de la structure rigide mobile pourrait être substantiellement rectiligne, de sorte que le mouvement de coulissement de la partie de montage par rapport à la structure rigide de base serait lui aussi rectiligne ; de préférence, toutefois, ladite structure rigide de base et ladite partie de montage ont un profil courbe, de sorte que le mouvement de coulissement de la structure rigide mobile par rapport à la structure rigide de base est substantiellement curviligne.

Ce mouvement de coulissement substantiellement curviligne conduit à un déplacement de ladite barre transversale et desdits arceaux non seulement vers le haut par rapport à ladite structure rigide de base mais également vers l'avant par rapport à celle-ci, qui permet de réaliser un meilleur enveloppement et une meilleure contention de la tête de l'utilisateur.

De préférence, le dispositif comprend des moyens de maintien de la structure rigide mobile en position de déploiement par rapport à la structure rigide de base.

Ces moyens peuvent être du type à enclenchement, venant en prise lorsque la structure rigide mobile arrive en position de déploiement, ou du type élastique.

Selon une forme de réalisation possible de l'invention :
- ladite structure rigide de base comprend une pluralité de tubes creux disposés côte-à-côte, dimensionnés pour s'étendre sur l'ensemble du dos de l'utilisateur, dans le sens longitudinal de ce dos, et
- ladite partie de montage est formée par une pluralité de barres rigides allongées, disposées côte-à-côte, dont chacune est apte à être engagée et à coulisser à l'intérieur d'un tube creux correspondant de la structure rigide de base ;
- des moyens élastiques de déploiement, tels que des ressorts ou des cordons élastiques, permettant le déploiement de la structure rigide mobile, sont interposés entre tout ou partie des tubes creux et desdites barres rigides.

Un assemblage parfaitement rigide et résistant est ainsi obtenu entre ladite structure rigide de base et ladite structure rigide mobile.

Selon une forme de réalisation préférée de l'invention, ladite partie de montage comprend sept barres rigides allongées et ladite structure de base comprend sept tubes creux correspondants ; les barres rigides allongées situées les plus à l'extérieur de la partie de montage ont pour fonction d'assurer le guidage de la structure rigide mobile par rapport à la structure rigide de base ; lesdits moyens élastiques de déploiement sont interposés entre les barres allongées intermédiaires externes, c'est-à-dire adjacentes à ces barres extérieures, et les fonds des tubes correspondants ; les barres allongées intermédiaires internes, c'est-à-dire adjacentes à ces barres intermédiaires externes, comprennent des moyens de maintien de la structure rigide mobile en position de déploiement par rapport à la structure de base ; la barre allongée centrale comprend un orifice de retenue qui vient en coïncidence d'un orifice de retenue aménagé dans le tube correspondant lorsque ladite structure rigide mobile est en position de rétractation, ces orifices étant aptes à recevoir, dans cette position de coïncidence, une goupille de blocage de ladite structure rigide mobile en position de rétractation.

Avantageusement, ladite pluralité de tubes creux est placée dans une enveloppe formant un sac à dos ayant une structure rigide, qui est recouverte d'un matériau absorbeur de chocs.

De préférence, les moyens de déploiement automatique de ladite structure rigide mobile comprennent un organe de blocage relié par un cordon à un objet dont l'utilisateur s'éloigne en cas de chute, notamment relié à un véhicule à deux roues, cet organe de blocage adoptant normalement une position de maintien de ladite structure rigide mobile en position de rétraction et étant amené dans une position de libération du coulissement de cette structure rigide mobile en cas de chute, par suite de la traction exercée sur lui par ledit objet.

De préférence, le dispositif de protection comprend en outre :
- deux tiges de guidage agencées longitudinalement sur chacun des côtés de ladite structure de base, chaque tige de guidage comprenant un organe de butée au niveau de ses extrémités inférieure et supérieure, et
- deux barres de retenue, dont chacune est reliée par l'une de ses extrémités à l'un desdits arceaux et par son autre extrémité à la tige de guidage correspondante, chaque barre de retenue étant apte à coulisser le long de sa tige de guidage correspondante, depuis l'extrémité inférieure de celle-ci vers l'extrémité supérieure de celle-ci lorsque ladite structure rigide mobile passe de ladite position de rétraction à ladite position de déploiement.

L'ensemble tiges de guidage - barres de retenue permet ainsi de contrôler le déploiement de la structure rigide mobile, notamment lorsque celle-ci arrive en bout de course de déploiement.

L'invention sera bien comprise, et d'autres caractéristiques et avantages de celle-ci apparaîtront, en référence aux dessins schématiques annexés, représentant, à titre d'exemple non limitatif, une forme de réalisation préférée du dispositif de protection qu'elle concerne.
La figure 1 est une vue en perspective éclatée montrant une structure rigide de base et une structure rigide mobile que comprend ce dispositif ;
la figure 2 est une vue en perspective du dispositif à l'état assemblé, alors que ladite structure rigide mobile est dans une position de rétraction par rapport à ladite structure rigide de base, et
la figure 3 est une vue en perspective du dispositif à l'état assemblé, alors que ladite structure rigide mobile est dans une position de déploiement par rapport à ladite structure rigide de base.

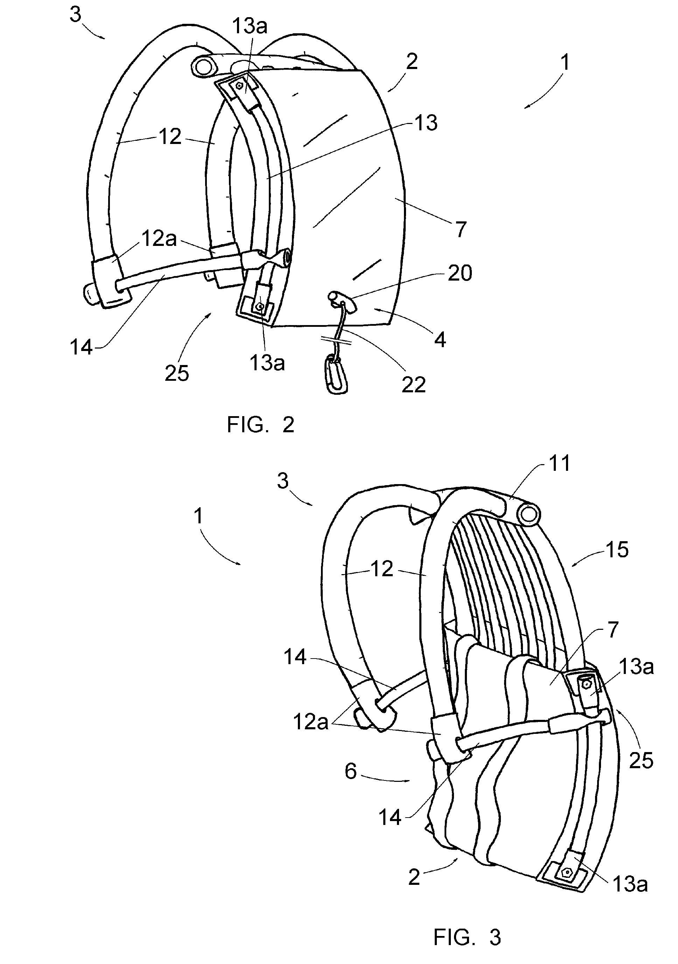

Les figures 2 et 3 représentent un dispositif 1 de protection d'une personne en cas de chute, notamment d'un utilisateur de véhicule à deux roues.

Le dispositif 1 comprend une structure rigide de base 2, une structure rigide mobile 3 et des organes 4 de déploiement automatique de la structure rigide mobile 3 par rapport structure de base 2, de la position de rétraction montrée sur la figure 2 à la position de déploiement montrée sur la figure 3.

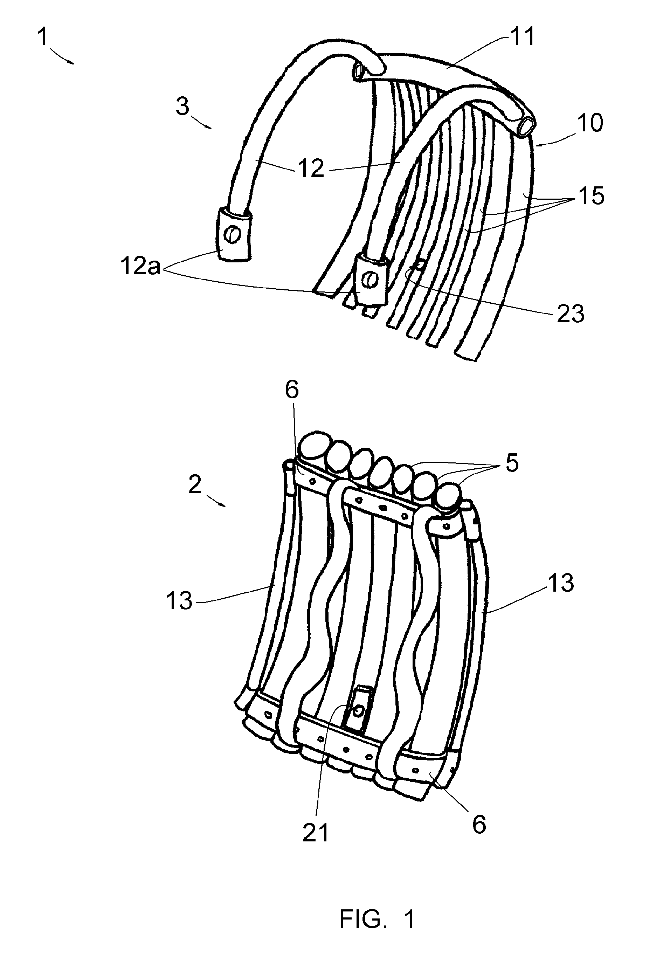

Comme le montre plus particulièrement la figure 1, la structure de base 2 comprend une pluralité de tubes creux 5 disposés côte-à-côte et dimensionnés pour s'étendre sur l'ensemble du dos de l'utilisateur, dans le sens longitudinal de ce dos. Les tubes 5 ont, vus de profil, une forme générale courbe. Le tube 5 central comprend un orifice inférieur 21 le traversant de part en part.

Ces tubes 5 sont, dans l'exemple représenté, assemblés par deux ceintures 6 auxquelles sont reliées des bretelles et le tout est placé dans une enveloppe 7 (cf. figures 2 et 3) ayant une structure rigide, recouverte d'un matériau absorbeur de chocs, l'ensemble formant un sac à dos.

La structure rigide mobile 3 comprend une partie de montage 10, une barre transversale 11 et deux arceaux 12. L'ensemble peut notamment être en métal, la barre transversale 11 et les arceaux 12 étant recouverts de gaines en matériau souple.

La partie de montage 10 est formée par une pluralité de barres rigides allongées 15, disposées côte-à-côte, dont chacune a, vue de profil, une forme générale courbe la rendant apte à être engagée et à coulisser à l'intérieur d'un tube creux 5 correspondant. Des ressorts ou des cordons élastiques de déploiement sont disposés entre tout ou partie des tubes 5 et des barres rigides 15 et agissent dans le sens du déploiement de la structure rigide mobile 3. Les barres extérieures ont des diamètres supérieurs à ceux des autres barres 15 et servent au guidage du coulissement de la structure 3. La barre 15 centrale comprend un trou 23 la traversant de part en part, venant en coïncidence du trou 21 lorsque la structure rigide mobile 3 est en position de rétraction.

La barre transversale 11 est reliée aux extrémités supérieures des barres 15 et est dimensionnée de manière à s'étendre substantiellement sur la largeur des épaules d'un utilisateur lorsque le dispositif 1 est porté par ce dernier.

Les deux arceaux 12 s'étendent depuis la barre transversale 11, du côté de cette barre opposé à celui sur lequel se trouvent les barres 15 et en regard de celles-ci.

Comme cela se comprend, le dispositif 1 est dimensionné de manière telle qu'en position de rétraction de la structure 3, la barre transversale 11 soit située au niveau de la nuque de l'utilisateur et que les arceaux 12 passent au dessus des épaules de cet utilisateur, en s'étendant substantiellement le long du thorax de celui-ci ; le dispositif 1 est également dimensionné de manière telle qu'en position de déploiement de la structure 3, la barre transversale 11 et les arceaux 12 se trouvent au niveau de la tête de l'utilisateur.

En outre, la forme courbe des tubes 5 et des barres 15 fait que le mouvement de déploiement de la structure rigide mobile 3 par rapport à la structure de base 2 est substantiellement curviligne, conduisant, lors du déploiement de la structure 3, à un déplacement de la barre transversale 11 et des arceaux 12 non seulement vers le haut mais également vers l'avant par rapport à la structure de base 2.

Les organes 4 de déploiement automatique comprennent une goupille de blocage 20 apte à être insérée dans les trous 23 et 21, et reliée par un cordon 22 à un objet dont l'utilisateur s'éloigne en cas de chute, notamment relié à un véhicule à deux roues. La goupille 20 adopte ainsi normalement une position de maintien de la structure 3 en position de rétraction et est amenée dans une position de libération du coulissement de cette structure 3 en cas de chute, par suite de la traction exercée sur elle par ledit objet.

Le dispositif de protection 1 comprend en outre un ensemble 25 permettant de contrôler le déploiement de la structure rigide mobile 3, notamment lorsque celle-ci arrive en bout de course de déploiement.

Cet ensemble 25 est constitué par :
- deux tiges de guidage 13 agencées longitudinalement sur chacun des côtés de ladite structure rigide de base 2, chaque tige de guidage 13 comprenant deux organes de butée 13a au niveau de ses extrémités inférieure et supérieure, et
- deux barres de retenue 14, dont chacune est reliée par l'une de ses extrémités à un embout terminal 12a d'un desdits arceaux 12 et par sa deuxième extrémité à l'une desdites tiges de guidage 13 correspondantes ; chaque barre de retenue 14 est apte à coulisser le long de la tige de guidage 13 correspondante, depuis l'extrémité inférieure de celle-ci vers l'extrémité supérieure de celle-ci lorsque la structure rigide mobile 3 passe de ladite position de rétraction à ladite position de déploiement.

Comme cela apparaît de ce qui précède, l'invention fournit un dispositif 1 ayant pour avantage déterminant de protéger efficacement son utilisateur en cas de chutes ou d'accidents à des vitesses importantes, en protégeant non seulement la partie dorsale mais également les cervicales, les épaules et le thorax de cet utilisateur.

Ce dispositif 1 a également pour avantage de pouvoir être facilement réutilisable après déclenchement.

L'invention a été décrite ci-dessus en référence à une forme de réalisation donnée à titre d'exemple. Il va de soi qu'elle n'est pas limitée à cette forme de réalisation mais qu'elle s'étend à toutes les formes autres de réalisation couvertes par les revendications ci-annexées.

## Revendications

1. Dispositif (1) de protection d'une personne en cas de chute, notamment d'un utilisateur de véhicule à deux roues, **caractérisé en ce qu'**il comprend une structure rigide (2, 3) destinée à être placée sur le dos de l'utilisateur lorsque le dispositif (1) est porté et dimensionnée de manière à recouvrir la majeure partie du dos de cet utilisateur, cette structure rigide (2, 3) comprenant une barre transversale (11) dimensionnée de manière à s'étendre substantiellement sur la largeur des épaules d'un utilisateur lorsque le dispositif (1) est porté par ce dernier, et deux arceaux (12) s'étendant depuis ladite barre transversale (11), sur le côté avant de l'utilisateur lorsque le dispositif (1) est porté, ledit dispositif (1) étant dimensionné de manière telle que, dans une première position, ladite barre transversale (11) et la base desdits arceaux (12) se trouvent au niveau de la tête de l'utilisateur.

2. Dispositif (1) selon la revendication 1, **caractérisé en ce qu'**il comprend :
- une structure rigide de base (2) destinée à être placée sur le dos de l'utilisateur lorsque le dispositif (1) est porté et dimensionnée de manière à recouvrir la majeure partie du dos de cet utilisateur ;
- une structure rigide mobile (3), déployable par rapport à ladite structure rigide de base (2), comprenant :
i) une partie de montage (10) reliée de manière coulissante à ladite structure rigide de base (2), et mobile par rapport à cette dernière entre une position de rétraction, dans laquelle elle est reçue dans cette structure rigide de base (2), et une position de déploiement, dans laquelle elle fait saillie de la partie supérieure de ladite structure rigide de base (2) ;
ii) ladite barre transversale (11), reliée à l'extrémité supérieure de ladite partie de montage (10) ;
iii) lesdits deux arceaux (12),
ledit dispositif (1) étant dimensionné de manière telle qu'en position de rétraction de ladite partie de montage (10), ladite barre transversale (11) soit située au niveau de la nuque de l'utilisateur et lesdits arceaux (12) passent au dessus des épaules de l'utilisateur et s'étendent substantiellement le long du thorax de cet utilisateur, et qu'en position de déploiement de ladite partie de montage (10), ladite barre transversale (11) et la base desdits arceaux (12) se trouvent au niveau de la tête de l'utilisateur ; et
- des moyens (4) de déploiement automatique de ladite structure rigide mobile.

3. Dispositif (1) selon la revendication 2, **caractérisé en ce que** ladite structure rigide de base (2) et ladite partie de montage (10) ont un profil courbe, de sorte que le mouvement de coulissement de la structure rigide mobile (3) par rapport à la structure rigide de base (2) est substantiellement curviligne.

4. Dispositif (1) selon la revendication 2 ou la revendication 3, **caractérisé en ce qu'**il comprend des moyens (4, 21, 23) de maintien de la structure rigide mobile (3) en position de déploiement par rapport à la structure de base (2).

5. Dispositif (1) selon l'une des revendications 2 à 4, **caractérisé en ce que** :
- ladite structure rigide de base (2) comprend une pluralité de tubes creux (5) disposés côte-à-côte, dimensionnés pour s'étendre sur l'ensemble du dos de l'utilisateur, dans le sens longitudinal de ce dos, et
- ladite partie de montage (10) est formée par une pluralité de barres rigides allongées (15), disposées côte-à-côte, dont chacune est apte à être engagée et à coulisser à l'intérieur d'un tube creux (5) correspondant de la structure rigide de base (2) ;
- des moyens élastiques de déploiement, tels que des ressorts ou des cordons élastiques, permettant le déploiement de la structure rigide mobile (3), sont interposés entre tout ou partie des tubes creux (5) et desdites barres rigides (15).

6. Dispositif (1) selon la revendication 4 ou la revendication 5, **caractérisé en ce que** ladite partie de montage (10) comprend sept barres rigides allongées (15) et ladite structure de base (2) comprend sept tubes creux (5) correspondants ; les barres rigides allongées (15) situées les plus à l'extérieur de la partie de montage (10) ont pour fonction d'assurer le guidage de la structure rigide mobile (3) par rapport à la structure de base (2) ; lesdits moyens élastiques de déploiement sont interposés entre les barres rigides allongées (15) intermédiaires externes, c'est-à-dire adjacentes à ces barres extérieures et les fonds des tubes (5) correspondants ; les barres rigides allongées intermédiaires internes, c'est-à-dire adjacentes à ces barres intermédiaires externes, comprennent des moyens de maintien de la structure rigide mobile (3) en position de déploiement par rapport à la structure de base (2) ; la barre allongée (15) centrale comprend un orifice de retenue (23) qui vient en coïncidence d'un orifice de retenue (21) aménagé dans le tube (5) correspondant lorsque ladite structure rigide mobile (3) est en position de rétractation, ces orifices (21, 23) étant aptes à recevoir, dans cette position de coïncidence, une goupille (20) de blocage de ladite structure rigide mobile (3) en position de rétractation.

7. Dispositif (1) selon la revendication 5 ou la revendication 6, **caractérisé en ce que** ladite pluralité de tubes creux (5) est placée dans une enveloppe (7) formant un sac à dos ayant une structure rigide, qui est recouverte d'un matériau absorbeur de chocs.

8. Dispositif (1) selon l'une des revendications 2 à 7, **caractérisé en ce que** les moyens de déploiement automatique de ladite structure rigide mobile (3) comprennent un organe de blocage (20) relié par un cordon (22) à un objet dont l'utilisateur s'éloigne en cas de chute, notamment relié à un véhicule à deux roues, cet organe de blocage (20) adoptant normalement une position de maintien de ladite structure rigide mobile (3) en position de rétraction et étant amené dans une position de libération du coulissement de cette structure rigide mobile (3) en cas de chute, par suite de la traction exercée sur lui par ledit objet.

9. Dispositif (1) selon l'une des revendications 2 à 8, **caractérisé en ce qu'**il comprend :
- deux tiges de guidage (13) agencées longitudinalement sur chacun des côtés de ladite structure de base (2), chaque tige de guidage (13) comprenant un organe de butée (13a) au niveau de ses extrémités inférieure et supérieure, et
- deux barres de retenue (14), dont chacune est reliée par l'une de ses extrémités à l'un desdits arceaux (12) et par son autre extrémité à la tige de guidage (13) correspondante, chaque barre de retenue (14) étant apte à coulisser le long de sa tige de guidage (13) correspondante, depuis l'extrémité inférieure de celle-ci vers l'extrémité supérieure de celle-ci lorsque ladite structure rigide mobile (3) passe de ladite position de rétraction à ladite position de déploiement.
